# EUROPEAN PATENT APPLICATION

(11) **EP 1 457 473 A1**
(43) Date of publication of application: **15.09.2004**
(21) Application number: 02783871.3
(22) Date of filing: 24.10.2002
(51) Int. Cl.: C05G 1/00, C05C 13/00

(54) **LIQUID NITROGEN-POTASH FERTILISER**

(30) Priority: 29.10.2001 RU 2001129101
(71) Applicant: Serebryakov, Alexandr Ivanovich, Moskovskaya obl. 143031 (RU); Dukhanin, Vladimir Fedorovich, Nevinnomyssk, 357030 (RU)
(72) Inventor: Serebryakov, Alexandr Ivanovich, Moskovskaya obl. 143031 (RU); Dukhanin, Vladimir Fedorovich, Nevinnomyssk, 357030 (RU)
(74) Representative: Freiherr von Wittgenstein, Arved, Dr.
(86) International application number: PCT/RU2002/000466
(87) International publication number: WO 2003/037828

(57) **Abstract**

A liquid nitrogen-containing fertilizer comprising a nitrogen-containing component, a potassium-containing component and water, wherein the nitrogen-containing component includes ammonium nitrate, carbamide and ammonium hydroxide, and the potassium-containing component includes potassium carbonate and potassium chloride at the following component ratio in weight percent: NH₄NO₃, (NH₂)₂CO and NH₄OH in terms of N - 22-30, KCl and K₂CO₃ in terms of K₂O - 3-20, H₂O being the rest, and the ammonium nitrate content of the nitrogen-containing component is selected in the range between 40% and 59.5%, the carbamide content - in the range between 30% and 39.5%, the ammonium hydroxide content being the rest, and the potassium chloride content of the potassium-containing component is selected in the range between 0.5% and 26.5%, potassium carbonate being the rest.

## Description

### Field of the Invention

The invention relates to the production of liquid nitrogen-potash fertilizers and may be used in the chemical industry and agriculture.

### Prior Art

Known in the art is a liquid nitrogen-potash fertilizer containing an aqueous solution of carbamide CO(NH₂)₂ and potassium nitrite KNO₂, which is produced by introducing carbamide into 10 - 70 % solution of KNO₂ in the amount of 2 - 60 % of the total weight of the solution (RU 214551, C 05 D 1/00, 1968). The fertilizer is disadvantageous in that it contains nitrogen in the nitrite form (NO₂) and the amide form (NH₂) only, where for most plants fertilizers are required, which contain nitrogen in the nitrate form (NO₃) and the ammonium form (NH₄).

Also known in the art is a liquid nitrogen-potash fertilizer containing an aqueous solution of carbamide CO(NH₂)₂, potassium chloride KCl and ammonium hydroxide NH₄OH - the ammonium-containing component having concentrations, respectively, 15-42 % by weight, 1-2 % by weight and 0.25 - 2 % by weight. The water concentration is within the range between 30 and 55 % by weight (US 3918952, 1975). The fertilizer is disadvantageous in that in contains a relatively small rate of nutrients, i.e., nitrogen and potassium, due to the use of a big quantity of water. The fertilizer contains nitrogen in the ammonium form (NH₄) and the amide form (NH₂), but lacks the nitrate form (NO₃), which is very necessary for most plants.

The closest as to composition of nutrients (availability of the nitrogen forms and potassium, as necessary for plants) to the fertilizer according to this invention is a liquid nitrogen-potash fertilizer containing carbamide, the potassium-containing component in the form of potassium chloride, the nitrogen-containing component - ammonium nitrate, and water, where the ratio of the components (in % by weight) is: carbamide 20-34, potassium chloride 5-25, ammonium nitrate 25-42, water being the rest. Furthermore, the liquid nitrogen-potash fertilizer contains magnesium sulfate - 0.3-3 % by weight or clay - 1.5-3 % by weight (RU 2168487, 2000). The said fertilizer is disadvantageous in that it contains a lower quantity of nitrogen in the ammonium form, which is present in ammonium nitrate only in the range between 4.25 and 7.14 % by weight in terms of nitrogen. Another disadvantage of the said fertilizer is that it contains potassium only in the form of potassium chloride, but for some vegetable and industrial crops, e.g., for cucumbers and tobacco, it is necessary to use fertilizers containing potassium as a nutrient, i.e., practically not containing chlorine.

### Description of the Invention

The technical objective of this invention is to create a fertilizer wherein a large number of nitrogen forms are combined, and such forms being best assimilated by plants, the ammonium (NH₄) form, the nitrate form (NO₃) and the amide form (NH₂), as well as with a reduced chlorine content and a increased nutrient content.

The stated objective is achieved owing to the fact that in the liquid nitrogen-potash fertilizer, which comprises the nitrogen-containing component, potassium-containing component and water, the nitrogen-containing component includes ammonium nitrate, carbamide and ammonium hydroxide, and the potassium-containing component includes potassium chloride and potassium carbonate at the following ratio (by weight): NH₄NO₃, (NH₂)₂CO and NH₄OH - 22-30% in terms of N; KCl and K₂CO₃ - 3-20% in terms of K₂O; water being the rest; while the ammonium nitrate content of the said component is within the range between 40% and 59.5%, the carbamide content is within the range between 30% to 39.5%, ammonium hydroxide being the rest: and the potassium chloride content of the potassium-containing component is selected within the range between 0.5% and 26.5%, carbonate being the rest. It is known that nitrogen contained in ammonium salts is most easily assimilated by plants; where nitrates are first reduced to nitrites in plant tissues, then to ammonia processed into amino acids and proteins (D.N. Pryanishnikov, Selected Works. V. I, II, III. Sel'khozgiz, 1952-1953).

All the nitrogen-containing components of this nitrogen-potash fertilizer (ammonium nitrate, carbamide and ammonium hydroxide) are non-ballast, and in a combination with a chloride, and especially with potassium carbonate, the efficacy of this fertilizer grows significantly. The nitrogen-potash fertilizer, which is made on the basis of ammonium nitrate, carbamide, ammonia water in the combination with carbonate and potassium chloride, quickly passes into the soil solution, which ensures easy assimilability of nitrogen and potassium by plants (M.Ye. Pozin. Technology of Mineral Salts. Part I, "Khimia" Publishers, 1974, p. 20).

The present invention complies with the patentability criterion "novelty", since no technical solution has been found in the prior art, which essential features would fully coincide with the features contained in the independent claim. The invention also complies with the patentability criterion "inventive step", since no description of a technical solution is contained in the prior art, which distinctive features would be aimed at solving a technical task at which this invention is aimed.

The essence of the invention will be explained by the following examples:

### Example 1.

The nitrogen-containing component comprises a mixture of ammonium nitrate, carbamide and ammonium hydroxide. To an ammonium nitrate solution with the concentration 40% wt. carbamide and ammonium hydroxide are added, respectively, 40% : 39.5% : 20.5%. Then to the solution a mixture of carbonate and potassium chloride is added, having potassium chloride content 0.5%. The produced solution is heated and stirred.

In the result, the solution is obtained, which contains 22.12% wt. of NH₄NO₃, 21.84% wt. of (NH₂)₂CO, 11.34% wt. of NH₄OH, 0.14% wt. of KCl, 28.56% wt. of K₂CO₃, 17.0% wt. of H₂O. The freezing point of the solution is 28.0°C, the nutrient content is 8.32% wt. of nitrogen in the ammonium form NH₄; 10.05% wt. of nitrogen in the amide form NH₂; 3.76% wt. of nitrogen in the nitrate form NO₃; 19.50% wt. of potassium in terms of K₂O. The total nutrient content is 41.61% wt.

The comparison of the compositions according to this invention and the prototype (its upper limit), which contains 34.0% wt. of carbamide, 42.0% wt. of ammonium nitrate, 5.0% wt. of potassium chloride, 19% wt. of water, shows that the inventive fertilizer is practically chlorine-free and has a higher nutrient content - 41.61% wt. versus 32.9% wt. of the prototype fertilizer at the similar freezing temperature -28.0°C.

### Example 2.

Example 2 differs from Example 1 in that the ratio of ammonium nitrate, carbamide and ammonium hydroxide in the said nitrogen-containing component is 59.5% : 30% : 10.5%. Then to the solution a mixture of carbonate and potassium chloride, i.e., the potassium-containing component, the potassium chloride content of which is 26.5%, is added. The produced solution is heated and stirred.

In the result, the solution is obtained, which contains 37.85% wt. of ammonium nitrate, 19.09% wt. of carbamide, 6.40% wt. of ammonium hydroxide, 12.63% wt. of potassium carbonate, 4.55% wt. of potassium chloride, 19.2% wt. of water. The nutrient content of the solution is: 8.78% wt. of nitrogen in the amide form NH₂; 9.0% wt. of nitrogen in the ammonium form NH₄; 6.43% wt. of nitrogen in the nitrate form NO₃; in total 24.21% wt. of nitrogen and 11.32% wt. of potassium in terms of K₂O. The total nutrient content is 35.53% wt.

### Example 3.

Example 3 differs from Example 1 in that the ratio of ammonium nitrate, carbamide and ammonium hydroxide in the said nitrogen-containing component is 49.75% : 34.75% : 15.5%. Then to the solution a mixture of carbonate and potassium chloride, i.e., the potassium-containing component, the potassium chloride content of which is 13.3%, is added. The produced solution is heated and stirred.

In the result, the solution is obtained, which contains 34.83% wt. of ammonium nitrate, 24.33% wt. of carbamide, 10.85% wt. of ammonium hydroxide, 9.54% wt. of potassium carbonate, 1.46% wt. of potassium chloride, 19.0% wt. of water. The nutrient content of the solution is: 11.19% wt. of nitrogen in the amide form NH₂; 10.26% wt. of nitrogen in the ammonium form NH₄; 5.92% wt. of nitrogen in the nitrate form NO₃; in total 27.37% wt. of nitrogen and 7.37% wt. of potassium in terms of K₂O. The total nutrient content is 34.74% wt.

The comparison of the compositions according to this invention and the closest analogous solution (its lower limit), which contains 20.0% wt. of carbamide, 25.0% wt. of ammonium nitrate, 25.0% wt. of potassium chloride and 30.0% wt. of water, shows that the inventive fertilizer and has a higher nutrient content - 34.74% wt. versus 32.7% wt. of the closest analogous solution.

In the inventive fertilizer the potassium chlorides content of the initial mixture of potassium-containing components was 13.3%, and in the closest analogous invention only potassium chloride was used. Moreover, the nitrogen content in the ammonium form NH₄ of the inventive fertilizer is 10.26% wt., but that of the prototype invention is 4.25% wt.

### Example 4.

### (Beyond the limits of the concentrations of NH₄NO₃, CO(NH₂)₂, NH₄OH, KCl, K₂CO₃ in the nitrogen-containing component and the potassium-containing component, respectively, as stated in the claims.)

To a 35%-solution of ammonium nitrate carbamide and ammonium hydroxide are added, and these components' content of the nitrogen-containing mixture is, respectively, 40% : 39% : 21%. Then a mixture of potassium chloride and potassium carbonate is added to the solution. The potassium chloride content of the mixture of the potassium-containing components is 15.6%. The produced solution is heated and stirred.

The produced fertilizer does not comply with the conditions of the claims, since the total content of nitrogen-containing components in terms of nitrogen exceeds the maximum allowable quantity, and the content of potassium-containing components in terms of K₂O is less than the minimum allowable quantity. This is conditioned by the fact that initially increased amounts of ammonium nitrate, carbamide and ammonium hydroxide and lowered amounts of potassium chloride and potassium carbonate were artificially selected.

In the result, the solution is obtained, which contains 30.7% wt. of ammonium nitrate, 29.95% wt. of carbamide, 16.13% wt. of ammonium hydroxide, 2.7% wt. of potassium carbonate, 0.5% wt. of potassium chloride, 20.0% wt. of water. The nutrient content of the solution is: 13.78% wt. of nitrogen in the amide form NH₂; 16.89% wt. of nitrogen in the ammonium form NH₄ and in the nitrate form NO₃; in total 30.67% wt. of nitrogen and 2.14% wt. of potassium in terms of K₂O. The total nutrient content is 32.81% wt.

The increased nitrogen content and the insufficient potassium-containing components' content of the produced fertilizer does not ensure balanced assimilability of nutrients by, in particular, tobacco crops.

### Example 5.

### (Beyond the limits of the concentrations of the nitrogen-containing components and the potassium-containing components, as stated in the claims.)

To a 25%-solution of ammonium hydroxide ammonium nitrate and carbamide are added, and the ammonium nitrate, carbamide and ammonium hydroxide content of the produced nitrogen-containing mixture is, respectively, 40% : 35% : 25%. Then a mixture of potassium chloride and potassium carbonate is added to the solution of the nitrogen-containing components. The potassium chloride content of the mixture of the potassium-containing components is 26.5%. The produced solution is heated and stirred.

The produced fertilizer does not comply with the conditions of the claims, since the total content of nitrogen-containing components in terms of nitrogen is lower than the minimum allowable quantity, and the content of potassium-containing components in terms of K₂O is higher than the maximum allowable quantity. This is conditioned by the fact that in Example 5 lowered amounts of the nitrogen-containing components and increased amounts of the potassium-containing components were artificially selected.

In the result, the solution is obtained, which contains 21.52% wt. of ammonium nitrate, 18.83% wt. of carbamide, 13.45% wt. of ammonium hydroxide, 23.67% wt. of potassium carbonate, 8.53% wt. of potassium chloride, 15.0% wt. of water. The nutrient content of the solution is: 8.66% wt. of nitrogen in the amide form; 12.7% wt. of nitrogen in the ammonium form NH₄ and in the nitrate form NO₃; in total 21.36% wt. of nitrogen and 21.21% wt. of potassium in terms of K₂O. The total nutrient content is 42.57% wt.

The insufficient nitrogen content and the increased potassium-containing components' content of the produced fertilizer does not ensure balanced assimilability of nutrients by, in particular, tobacco crops. Moreover, the liquid nitrogen-potash fertilizer according to Example 5 contains, in comparison to the fertilizers according to Examples 1 - 3, a higher quantity of potassium, which makes the solution viscous and technologically difficult for the use in agriculture.

The tests of the fertilizers according to Examples 1 - 5 on tobacco crops have shown that the inventive fertilizer (Examples 1 - 3) ensures the biggest assimilability of nitrogen and potassium.

### Industrial Applicability

The liquid nitrogen-potash fertilizer in accordance with this invention is industrially applicable and may be used most successfully in the chemical industry and agriculture. The liquid nitrogen-potash fertilizer in accordance with this invention is a stable and balanced system that is characterized by valuable agrochemical properties owing to the high potassium content, which is applied in the form of a mixture of carbonates and chlorides, and the high nitrogen content, which is represented in the amide, ammonium and nitrate forms, and has the total nutrient content in the range between 37.74% wt. and 41.61% wt. This fertilizer is especially effective for non-root addition of fertilizers by their spraying onto leaves of tobacco and other crops.

## Claims

1. A liquid nitrogen-containing fertilizer comprising a nitrogen-containing component, a potassium-containing component and water, **characterized in that** the nitrogen-containing component includes ammonium nitrate, carbamide and ammonium hydroxide, and the potassium-containing component includes potassium carbonate and potassium chloride at the following component ratio in weight percent: NH₄NO₃, (NH₂)₂CO and NH₄OH in terms of N - 22-30, KCl and K₂CO₃ in terms of K₂O - 3-20, H₂O being the rest, and the ammonium nitrate content of the nitrogen-containing component is selected in the range between 40% and 59.5%, the carbamide content - in the range between 30% and 39.5%, the ammonium hydroxide content being the rest, and the potassium chloride content of the potassium-containing component is selected in the range between 0.5% and 26.5%, potassium carbonate being the rest.
